# EUROPEAN PATENT APPLICATION

(11) **EP 1 739 930 A1**
(43) Date of publication of application: **03.01.2007**
(21) Application number: 06012610.9
(22) Date of filing: 20.06.2006
(51) Int. Cl.: H04M 1/02

(54) **Method of performing a call in a wireless terminal**

(30) Priority: 27.06.2005 KR 20050055858
(71) Applicant: Samsung Electronics Co., Ltd., Suwon-si, Gyeonggi-Do (KR)
(72) Inventor: Kim, Hwan Samsung Electronics Co., Ltd., Suwon-si Gyeonggi-do (KR); Lim, Chae-Whan Samsung Electronics Co., Ltd., Suwon-si Gyeonggi-do (KR)
(74) Representative: Lang, Johannes

(57) **Abstract**

Provided is a method of performing a video call in a wireless terminal such as cellular or mobile phone having a main body, a folder pivotally mounted on the main body so as to be turned either to a first lengthwise position at which the folder is arranged parallel with the main body or to a second crosswise position at which the folder is arranged crosswise to the main body, and a display unit provided in the folder. The method comprises the steps of determining whether the folder is in the first lengthwise position or in the second crosswise position (203) after inputting or selecting a telephone number of a distant party (202), and trying to establish video communication with the distant party if the folder is in the second crosswise position (204).

## Description

### BACKGROUND OF THE INVENTION

### Field of the Invention:

The present invention relates to a method of performing a call in a wireless terminal. More particularly, the present invention relates to a method of performing a video call in a wireless terminal such as cellular or mobile phone that comprises a main body, a folder pivotally mounted on the main body so as to be turned either to a first lengthwise position at which the folder is arranged parallel with the main body or to a second crosswise position at which the folder is arranged crosswise to the main body, and a display unit provided in the folder.

### Description of the related art:

Current wireless mobile phones are enabled for high-speed data transmission in addition to conventional voice communication. Specifically, mobile communication networks operating according to the IMT 2000 specification may facilitate high-speed data communication in addition to voice communication with a wireless mobile terminal. The data transmitted with a wireless terminal in data communication may include packet data and video data. Wireless terminals have also been provided with a camera and TV receiver in order to add a video display function. The camera and TV receiver enables the wireless terminal to display or transmit moving or still pictures taken by the camera, and to display received TV signals.

Thus, a wireless terminal having a video communication function enables the user to transmit and receive video data together with audio data. In such a wireless terminal, it has been required to input a particular key for initiating a video call after entering a telephone number of a distant party.

Accordingly, there is a need for an improved wireless terminal that doesn't require a particular key be inputted for initiating a video call after entering a telephone number of a distant party.

### SUMMARY OF THE INVENTION

Exemplary embodiments of the present invention address at least the above problems and/or disadvantages and provide at least the advantages described below. Accordingly, an aspect of the present invention is to provide a wireless terminal with a method of automatically performing a video call by turning its folder.

According to an aspect of an exemplary embodiment of the present invention, a method of performing a video call comprises the steps of determining whether the folder is in the first lengthwise position or in the second crosswise position after inputting or selecting a telephone number of a distant party, and trying to establish video communication with the distant party if the folder is in the second crosswise position.

According to another aspect of an exemplary embodiment of the present invention, a method of performing a video call comprises the steps of determining whether the folder is in the first lengthwise position or in the second crosswise position if there is a key for demanding video communication inputted after inputting or selecting a telephone number of a distant party, and trying establish into video communication with the distant party if the folder is in the second crosswise position.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE ATTACHED DRAWINGS

The above and other objects, features, and advantages of certain embodiments of the present invention will be more apparent from the following description taken in conjunction with the accompanying drawings, in which:
Fig. I is a block diagram for illustrating the functional structure of a wireless terminal used for embodying the inventive method;
Fig. 2 is a flow chart for illustrating the steps of a method of performing a video call by turning the folder according to an exemplary embodiment of the present invention; and
Fig. 3 is a flow chart for illustrating the steps of a method of performing a video call by turning the folder according to another exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

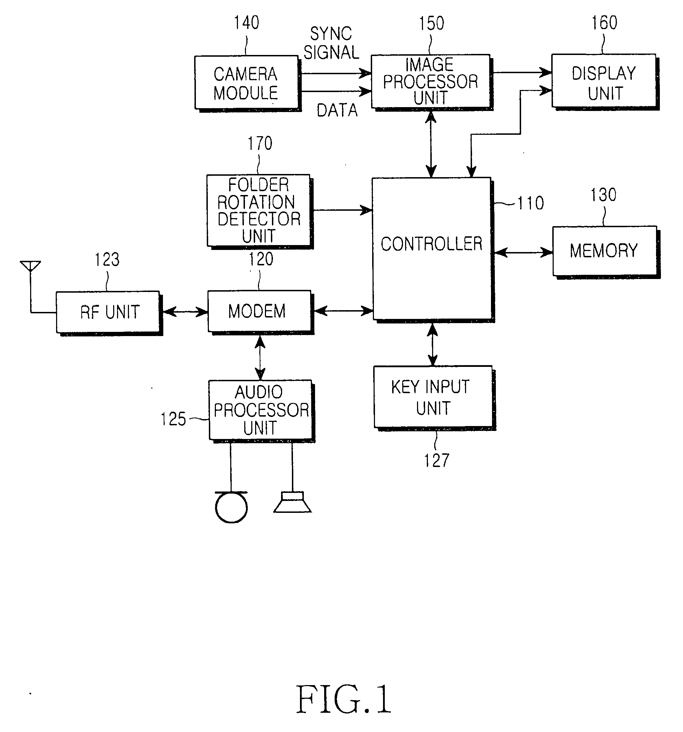

Referring to Fig. 1, an RF unit 123 for wireless communications comprises an RF transmitter for modulating and amplifying a signal for transmission and an RF receiver for demodulating and low-noise amplifying a received signal. A modem 120 is used for transforming digital signals from a controller 110 into the corresponding analog signals delivered to the RF unit 123, or analog signals from the RF unit into the corresponding digital signals delivered to an audio processor unit 125 or the controller 110. The audio processor unit 125 comprises a data codec for processing packet data and an audio codec for processing audio signals such as voice signals. The audio processor unit 125 converts the digital audio signals from the modem 120 into corresponding analog signals to be delivered to a speaker, or the analog audio signals from a microphone into corresponding digital signals to be delivered to the modem 120. The audio processor unit may be a separate unit or a built-in element of the controller 110.

A memory unit 130 comprises program memory and data memory. The program memory is for storing the programs used for controlling the general operations of the wireless terminal, including the programs for controlling the automatic switching of the wireless terminal to the video communication mode by turning the folder. Meanwhile, the data memory serves to temporarily store the data generated during execution of the programs.

The controller 110 controls the functions of the wireless terminal, and may be designed so as to include the modem 120 and the audio processor unit. Turning the folder to a rotational position for automatically enabling video communication in response to a video telephone call, the controller 110 controls the wireless terminal to be automatically switched to a first video communication mode. Here, we will define for the sake of convenience the rotational positions of the folder of the wireless terminal in reference to the main body as follows. Namely, the position at which the folder is arranged parallel with the main body is defined as a first lengthwise position, and the position at which the folder is arranged crosswise to the main body as a second crosswise position.

Accordingly, the rotational position for automatically enabling the video communication is the second crosswise position detected by a folder rotation detector unit 170 to generate a position detection signal delivered to the controller 110. The folder rotation detector unit 170 generates a first or a second position detection signal according the folder being in the first lengthwise or second crosswise position.

Describing more specifically the rotational position of the folder, when the user turns the folder to the second crosswise position after entering a telephone number, the folder rotation detector unit 170 generates the second position detection signal applied to the controller 110 to control the wireless terminal to commence video communication with the distant party. Of course, if the folder has been already turned to the second crosswise position before the telephone number has been entered, entering a communication key for sending a signal to the distant party suffices for calling the distant party.

Also provided is a camera module 140 which comprises a camera sensor for converting the optical signals of a captured image into the corresponding electrical signals, and a signal processor for converting the analog electrical signals from the camera sensor into the corresponding digital data. An exemplary camera sensor may be a CCD sensor, and the signal processor may be a DSP (Digital Signal Processor). Further, the camera sensor and the signal processor may be integrally combined, or separately formed.

An image processor unit 150 processes the image signals from the camera module 140 by frames so as to generate frame video data fitting the characteristics and size of a display unit 160. The image processor unit 150 includes a video codec to compress the frame video data or decompress the compressed frame video data according to a prescribed process. The video codec may be of a JPEG, MPEG4, or Wavelet type. Of course, any type of video codec may be used. The image processor unit 150 is provided with an OSD (On Screen Display unit) function to generate OSD data according to the screen size under the control of the controller 110.

The display unit 160 displays both image signals from the image processor unit 150 and user data transferred from the controller 110. The display unit 160 may comprise an LCD device, LCD controller, and memory for storing the video data. The LCD unit may be formed with a touch screen mode to serve as an input unit. The display unit 160 also displays a switching message to represent the video communication mode by turning the folder.

A key input unit 127 includes the keys for inputting information on numbers and characters and the keys for setting various functions. According to an exemplary embodiment of the present invention, the folder rotation detector unit 170 detects the rotational position of the folder so as to generate a first or second position detection signal delivered to the controller 110 according to the folder being in a first lengthwise or the second crosswise position.

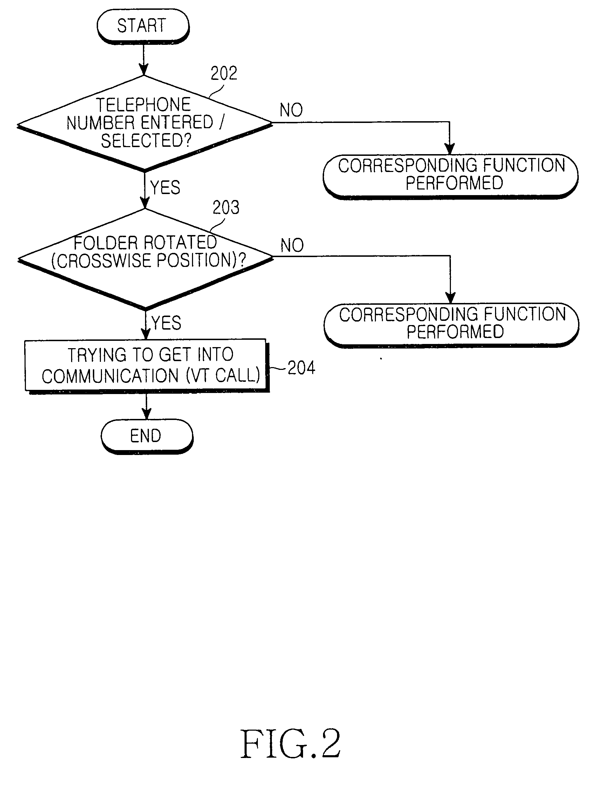

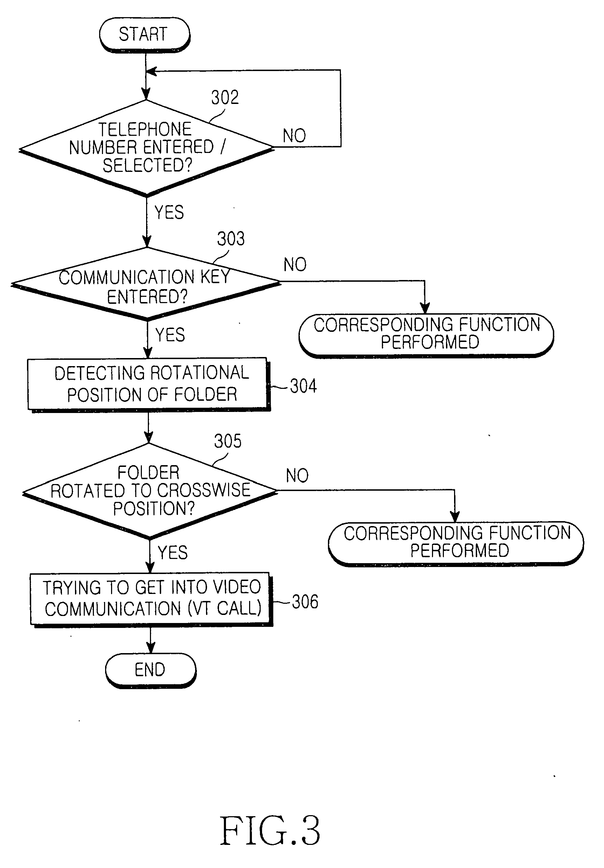

Hereinafter is described the inventive process for controlling the wireless terminal to be automatically switched to the video communication mode by turning the folder with reference to Figs. 2 and 3.

Referring to Fig. 2 for illustrating the process of automatically performing the video communication by turning the folder according to an exemplary embodiment of the present invention, when the folder is in the first lengthwise position with the folder rotation detector unit 170 generating the first position detection signal, and a telephone number is entered or selected from the phone book list stored in the terminal in step 202, the controller 110 goes to step 203 to determine whether the folder is turned to the second crosswise position. If no number is entered a corresponding function is performed.

Subsequently, if the folder rotation detector unit 170 generates the second position detection signal, the controller 110 goes to step 204 to call the distant party designated by the telephone number entered. If the folder is not rotated a corresponding function is performed. In addition, the controller 110 controls the display unit 160 to inform the user that the terminal is calling the distant party. Alternatively, when the folder rotation detector unit 170 generates the second position detection signal to represent the second crosswise position of the folder, the controller 110 controls the display unit to present a message asking the user to select the video communication mode. Alternatively, the controller 110 may control the terminal to automatically call the distant party, if the folder rotation detector unit 170 detects the second crosswise position of the folder with a camera rotation detector (not shown) detecting the proper position of the camera for taking the user's image in the upright position.

Referring to Fig. 3 for illustrating the process of automatically performing the video communication by turning the folder according to another exemplary embodiment of the present invention, when the folder is in the first lengthwise position with the folder rotation detector unit 170 generating the first position detection signal, and a telephone number is entered or selected from the phone book list stored in the terminal in step 302, and a communication key is entered in step 303, the controller 110 goes to step 304 to detect the rotational position of the folder. If no number is entered the step of determining if a number as been entered is repeated. Further, if no communication key is entered a corresponding function is performed.

Subsequently, if the folder rotation detector unit 170 generates the second position detection signal in step 305, the controller 110 goes to step 306 to call the distant party designated by the telephone number entered. If the folder is not rotated a corresponding function is performed. In addition, the controller 110 controls the display unit 160 to inform the user that the terminal is calling the distant party. Alternatively, when the folder rotation detector unit 170 generates the second position detection signal to represent the second crosswise position of the folder, the controller 110 controls the display unit to present a message asking the user to select the video communication mode. Alternatively, the controller 110 may control the terminal to automatically call the distant party, if the folder rotation detector unit 170 detects the second crosswise position of the folder with a camera rotation detector (not shown) detecting the right position of the camera to take the user's image in the upright position.

While the invention has been shown and described with reference to certain embodiments thereof, it will be understood by those skilled in the art that various changes in form and details may be made therein without departing from the spirit and scope of the invention as defined by the appended claims.

## Claims

1. A method of performing a video call in a wireless terminal having a folder and a body, comprising the steps of:
detecting the rotational direction of said folder when the folder is turned after inputting or selecting a telephone number of a distant party; and
trying to establish video communication with said distant party if said folder is turned to the direction for video communication.

2. A method as defined in Claim 1, wherein said telephone number is key-inputted one by one or selected from a phone book or communication list stored in said wireless terminal.

3. A method as defined in Claim 1, including the further step of displaying a message indicating that the terminal is trying to establish video communication when said folder is turned to the direction for video communication.

4. A method as defined in Claim 1, wherein the turning of said folder to the crosswise position for video communication initiates the video call.

5. A method of performing a video call in a wireless terminal having a folder and a body, comprising the steps of:
determining the state of said folder if there is a key for demanding communication inputted after inputting or selecting a telephone number of a distant party; and
trying to establish video communication with said distant party if said folder is turned to the direction for video communication.

6. A method as defined in Claim 5, wherein said telephone number is key-inputted one by one or selected from a phone book or communication list stored in said wireless terminal.

7. A method as defined in Claim 5, including the further step of displaying a message indicating that the terminal is trying to establish video communication when said folder is turned to the direction for video communication.

8. A method as defined in Claim 5, wherein the turning of said folder to the crosswise position for video communication initiates the video call.
